# EUROPEAN PATENT SPECIFICATION

(11) **EP 3 595 138 B1**
(45) Date of publication and mention of the grant of the patent: **20.10.2021**
(21) Application number: 19185394.4
(22) Date of filing: 10.07.2019
(51) Int. Cl.: H02K 3/26, H02K 15/04, H02K 1/18

(54) **A STATOR FOR AN AXIAL FLUX ELECTRIC MOTOR**
EIN STATOR FÜR EINEN AXIALFLUSS-ELEKTROMOTOR
UN STATOR POUR UN MOTEUR ÉLECTRIQUE À FLUX AXIAL

(30) Priority: 11.07.2018 IT 201800007097
(43) Date of publication of application: 15.01.2020
(73) Proprietor: S & H S.r.l., 20068 Peschiera Borromeo (MI) (IT)
(72) Inventor: GUFFANTI, Giovanni, 22073 Fino Mornasco CO (IT)
(74) Representative: Perani & Partners S.p.A.

(56) References cited:
- CN-U- 207 251 339
- DE-B- 1 147 305
- GB-A- 2 485 185
- JP-A- S63 262 038
- US-A- 2 441 960
- US-A- 4 804 574
- US-A1- 2010 156 401
- US-B1- 6 404 097

## Description

### Field of the invention

The invention relates to a stator of an axial flux electric motor having an electric circuit formed by a plurality of layers consisting, for instance, of printed circuit boards. The invention particularly finds application in axial flux electric motors for driving vehicles.

### Description of the prior art

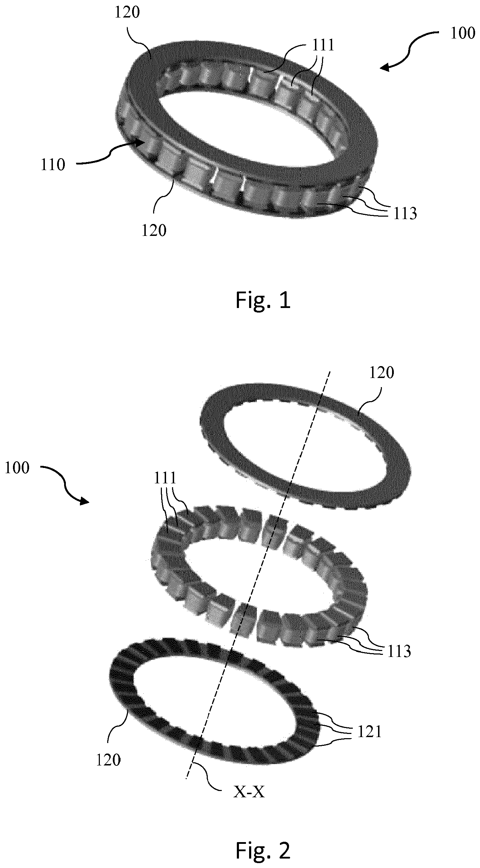

Axial flux motors 100, as shown in Figures 1 and 2, comprise at least one stator 110 and one rotor 120, having a cylindrical or annular shape, facing each other in the longitudinal direction, i.e. the direction in which the axis of rotation of the rotor extends. For example, one stator may be sandwiched between two rotors that are fixed to each other.

In the most common arrangement, the rotor 120 has permanent magnets 121, and the stator 110 comprises cores made of a ferromagnetic material 111 and windings formed with conductive wires 113 to induce a variable magnetic field in the cores. The windings 113 are formed on appropriate reels and are later secured together with the cores 111 to appropriate seats of a support structure (not shown), for example by resin embedding. This arrangement is labor-intensive, whereby the motor is not suitable for mass production. Furthermore, the support structure of the stator is very bulky and heavy and does not facilitate heat exchange with the outside environment. However, the heat generated in the windings 113 should be quickly dissipated to reduce the risk of overheating and allow the use of higher currents.

With small-power axial flux motors, the stator windings are known to be possibly formed with printed circuit boards, as shown for example in US 5589722.

Printed circuit boards comprise a support layer made of an electrically insulating material, such as epoxy fiberglass resin, with conductive tracks applied thereon. It will be understood that motors with PCB windings do not require spools or other support structures to ensure proper positioning of the windings. They are directly formed and stably fixed on the faces of the insulating support layers.

Furthermore, these motors, that generally have a small size, do not use magnetic cores, whereby the typical structure for supporting the windings and the cores is no longer required. In other words, the stator may be composed of a single printed circuit or a small number of mutually overlapping and fixed printed circuit layers. Nevertheless, an example of a motor with both PCB windings and magnetic cores is disclosed in GB 2485185 A.

The conductive tracks are usually formed by coating one surface of the insulating support with a metal foil, for example made of copper, and later removing the metal outside the tracks to be formed. Printed circuits are also known to be possibly formed with conductive tracks on both faces of the insulating support. Here, the tracks on the opposite surfaces may be electrically connected to each other by drilling the insulating support and metallizing the hole with chemical or electrolytic processes.

To increase the motor power, a plurality of printed circuit boards may be placed and glued one on top of the other, to form a multilayer structure. For connecting together the tracks of the various layers, according to a technique that is also known outside the field of electric motors, all the layers of the structure, after gluing, are simultaneously drilled, and the holes so formed are metallized. Therefore, the metal that fills the holes forms a bar that extends through the holes in all the layers.

Therefore, metallized holes may be formed in a single layer to connect the tracks on opposite faces, with the adjacent layers not being affected by such metallization, or they may extend through the entire thickness of the structure, throughout all the layers.

In any case, a series connection of the tracks of at least some of the layers is preferred in an electric motor. It is therefore desirable to connect the tracks of the various layers in twos, without connecting the tracks of all the layers to the same metallized holes. Nevertheless, with the above discussed technology, electric connection of any pair of layers requires the formation of metallized holes through layers that do not directly require connection, and will have less space for their conductive tracks. This would considerably increase the size of the motor even when connecting a small number of layers.

In addition, the chemical hole metallization process is only effective for multilayer structures composed of a limited number of layers, to a maximum thickness of about 2 mm, unless special high-cost techniques are used. This prevents the fabrication of motors having relatively high powers, e.g. of the order of a few tens or hundreds of kilowatts. CN 207251339 U shows an example motor where connections between different layers is based on metallized holes which may involve just couples of adj acent layers.JPH10248224 discloses an axial flux electric motor in which the stator is composed of a multilayer structure of printed circuits boards whose connection arrangement is other than the one discussed above. The conductive tracks are provided on one face of each insulating support. In order to connect the tracks of a layer with the tracks of the underlying layer a hole is formed in the insulating support of a single layer, and is filled with a conductive glue that reaches the track of the underlying layer. Nevertheless, the Applicant found that the electric contact between distinct layers in this motor covers a very small section, i.e. the section of the hole filled with conductive glue. This is only adequate for low currents, as higher currents require a greater number of holes. Therefore, the power of this motor is also limited, in particular by the maximum number of holes that can be formed and the connection resistance of the tracks of different layers. US4804574 discloses a stator with PCB windings, comprising three layers and a connection panel. Each of the three layers has PCB conductive tracks extending between a pair of terminals for generating a magnetic field. A conductive material is used to connect the terminals of the individual layers to the connection panel, directly or indirectly through terminals or conductive plates of the adjacent layers. Therefore, the connection panel may be used to power the various terminals of the layers.

More in detail, each layer has current flowing therethrough independently of the other layers. That is, a terminal for each layer, supposedly a neutral terminal, is short-circuited between the various layers by the conductive substance, thereby forming a common terminal. The remaining terminals of each layer are still independent of each other, and are supposed to represent the terminals of three different electrical phases.

For connection of terminals that are not common to the connection panel, especially for layers that are not directly adjacent to the connection panel, the intermediate layers have conductive plates named as "dummy terminals" which are electrically insulated from the conductive tracks of the respective layers that are designed to generate the magnetic field. Since the current for a phase may pass through the conductive tracks of one layer, the magnetic field so generated is very limited, and the motor cannot find application for significant powers.

### Summary of the invention

The object of the present invention is to solve the above discussed prior art problems. In particular, one object of the invention is to provide an alternative connection between the tracks of stacked printed circuit boards, which only affects two adjacent layers and not the entire multilayer structure.

A further object of the invention is to provide an axial flux electric motor that can be fabricated by PCB mass production and can develop high powers, for example 170 kW peak, by having a large number of layers adapted to carry significant currents as compared with the prior art.

Another object of the invention is to provide an axial flux motor, possibly having high powers and comprising magnetic cores, in which no expensive and bulky support structures are needed.

Yet another object of the invention is to afford the fabrication of high-power motors due to improved heat dissipation.

These and other objects are fulfilled by a stator for an axial flux electric motor as defined in claim 1 and by a method according to claim 10.

The stator of the invention includes a multilayer electric circuit with seats for housing magnetic cores. Each of the conductive tracks of the various layers defines a winding turn arranged around a respective seat. The tracks for the same seat are connected between the layers, thereby defining a path that forms a plurality of winding turns arranged around the seat.

The various layers are connected by an electrically conductive connecting material applied to the surface of the tracks of the distinct layers. Connecting materials suitable for this purpose are, for example, a glue containing silver micro-granules and a solder paste. This will provide a wide connecting section without forming many holes. Furthermore, the thickness of the multilayer structure obtained is not limited by the maximum depth of the holes to be metallized.

Depending on the shape of the tracks and the position of the connecting material, the tracks of the various layers may be connected in series or in parallel. Similarly, tracks on opposite faces of the same layer may be connected in series or in parallel, for example by means of metallized holes extending through a single layer.

With this track connecting scheme, the same current may flow through various layers by circulating around the same seat and providing motors with higher powers. Furthermore, each conductive track of each layer forms only a single winding turn surrounding its respective seat. As compared with the arrangements in which each track defines multiple winding turns on the same layer, this arrangement can ensure a large section of conductive material while affording a direct heat conduction path to the outside of the stator.

In addition to being able to carry high current and to exceed the powers afforded by prior art axial flux motors with PCB windings, the stator of the invention ensures high strength due to the fixation of various printed circuit layers.

Therefore, the invention can provide axial-flux motors in which the support structure both for the windings and the cores is composed of the PCB layers themselves, and particularly of their insulating supports. No additional support structures or winding spools are needed. This will provide benefits in terms of weight and volume of the motor, as well as dissipation of the heat generated in the conductive tracks, thereby increasing the maximum current afforded by the motor. This will simplify assembly of the motor, and reduce its cost.

### BIEF DESCRIPTION OF THE DRA WINGS

The characteristics and advantages of the present invention will result from the following detailed description of a possible practical embodiment, illustrated as a non-limiting example in the set of drawings, in which:
- Figure 1 shows a perspective view of a prior art axial flux electric motor,
- Figure 2 shows an exploded view of the motor of Figure 1,
- Figure 3 shows a perspective view of a motor according to one embodiment of the invention,
- Figure 4 shows an exploded perspective view of the motor of Figure 3,
- Figure 5 shows a top view of a layer of the electric circuit in the motor of Figure 3,
- Figures 6 and 7 show conductive tracks associated with the top face and the bottom face of the layer of Figure 5,
- Figures 8 and 9 show substrates of the circuit in the motor of Figure 3 arranged between adjacent layers,
- Figure 10 shows an exploded perspective view of a motor according to an alternative embodiment of the present invention,
- Figures 11 and 12 show exploded perspective views of certain parts of the motor of Figure 10,
- Figures 13 and 14 show front and rear perspective views of a module of the circuit of the motor of Figure 10,
- Figures 15 and 16 show perspective views of modules of a few layers of a multilayer electric circuit according to a further embodiment of the invention,
- Figures 17 and 18 show front and rear perspective views of a first of the modules of Figures 15 and 16, and
- Figures 19 and 20 show front and rear perspective views of a second of the modules of Figures 15 and 16.

### Detailed description

Referring to the accompanying figures, a rotating electric machine, in particular an electric motor, is designated by numeral 100. The electric rotating machine 100 comprises at least one stator 110 and one rotor 120, for example having a cylindrical or annular shape. In the illustrated embodiment the motor 100 comprises a stator 110 and two rotors 120.

The rotor 120 is rotatably connected to the stator 110 about an axis that extends in a longitudinal direction X-X. The rotor 120 comprises a plurality of polar regions, which are identified by permanent magnets 121 in the preferred embodiment. The polar regions of the rotor 120 face the stator 110 in the longitudinal direction X-X.

The stator 110 preferably comprises a central passage which is configured to receive a drive shaft. The stator 110 also has a plurality of polar regions that are identified by a multilayer electric circuit 1 and a plurality of cores 111 made of a ferromagnetic material.

The polar regions of the stator 110 face the rotor 120 in the longitudinal direction X-X. While the circuit 1 is shown with reference to a stator 110 of a rotating electric machine 100, a similar circuit 1 may also find an application, not covered by the claimed invention, outside the field of electric machines.

The circuit 1 comprises a plurality of stacked layers 2A, 2B, 2C, which are spaced apart in the axial direction X-X.

The layers 2A, 2B, 2C are fixed to each other, for example, by gluing using an electrically insulating glue 21 applied to the layers 2A, 2B, 2C at respective fixation portions. The electrically insulating glue 21, e.g. an epoxy resin, is preferably applied by screen printing. This arrangement may conveniently avoid the presence of the electrically insulating glue 21 outside the fixation portions.

After application, heat may have to be applied to the electrically insulating glue 21 for curing and stable fixation. Epoxy resins, after curing, can impart high strength to the stator 100, which is exposed to considerable forces acting toward the cores 111, the rotor 120, and the drive shaft. Nevertheless, the layers 2A, 2B, 2C may be also fixed together with other means known to the killed person.

While reference will be particularly made hereinafter to the layer 2A and the layer 2B, adjacent to 2A, the described features will be applicable to all the layers 2A, 2B, 2C of the circuit 1.

The layer 2A comprises an insulating support 3 having two flat and parallel opposite faces 31, 32, at least one of which faces an adjacent layer 2B. The insulating support 3 may be, for example, a board made of a thermosetting polymer such as epoxy fiberglass resin. The layer 2A further comprises at least two opposite planar conductive tracks 4 fixed to the insulating support 3, for example at the two opposite faces 31, 32. The tracks 4 are generally metal tracks, for example copper tracks. The insulating support 3 is interposed between the opposite conductive tracks 4. However, in certain embodiments, as further discussed below, the layer 2A comprises a plurality of intermediate levels between the insulating support 3 and at least one conductive track 4, whereby indirect fixation thereof is provided.

The intermediate levels comprise at least one insulating level adjacent to the conductive track 4 and at least one conductive level between the insulating level and the insulating support 3. Preferably, the insulating level has a smaller thickness than the insulating support 3. While strength is imparted by the insulating layer 3, the alternation of intermediate conductive and insulating levels can increase the amount of conductive material with respect to the total mass of the stator, which provides advantages both in terms of power and heat.

It will be appreciated that, considering the individual layer 2A, the conductive tracks 4 are external to the insulating layer 3 and the insulating levels, whereas the conductive levels are internal, between the insulating support 3 and at least one of the insulating levels.

Preferably, the insulating support 3 and/or the insulating levels and the conductive tracks 4 and/or the conductive levels of each layer 2A, 2B, 2C define a printed circuit board.

Of course, all the conductive tracks 4 of all the layers 2A, 2B, 2C are stably associated with the insulating supports 3. It shall be noted that the conductive tracks 4 form conductive windings in the stator 110 to induce a magnetic field in the cores 111. Therefore, the insulating supports 3 of the layers 2A, 2B, 2C of the multilayer electric circuit 1 forms a support structure with conductive windings associated therewith. Therefore, fixation of all the layers 2A, 2B, 2C ensures stable positioning of all the conductive tracks 4 without requiring additional support structures for the tracks 4 to be individually fixed thereto. This will avoid the presence of winding spools, as well as structures with seats for fixation of all the spools.

The thickness of the insulating support 3 may range from 50 to 200 µm, and be for example 100 µm. The thickness of each conductive track 4 may range from 100 to 500 µm, preferably from 200 to 300 µm. It shall be noted that the conductive tracks 4 cover a considerable portion of the thickness of each layer 2A, 2B, 2C. This allows the circuit to increase the current flow with given overall thickness and number of winding turns. Each track 4 has a first surface and an opposite second surface. The first surface of the track 4 faces the support 3 and is associated with a face 31, 32 of the support 3 with known techniques, whereas the second surface of the track 4 faces the adjacent layer 2B.

The second surface of each conductive track 4 has a connecting portion 41, for connection of conductive tracks 4 associated with insulating supports 3 of distinct layers 2A, 2B, 2C. More in detail, a highly conductive connecting material is applied to the second surfaces of the conductive tracks 4 of adjacent layers 2A, 2B, at their respective connecting portions 41. Therefore, one conductive track 4 of a layer 2A is electrically connected to one conductive track 4 of an adjacent layer 2B by means of the connecting material 5 arranged between the two tracks 4.

The connecting portions 41 are distinct from the fixation portions to prevent the connecting material 5 and the electrically insulating material from overlapping and mixing together.

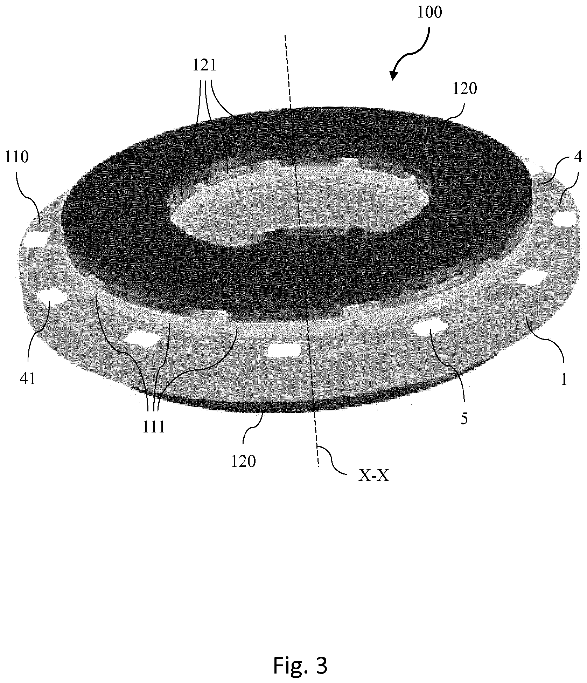

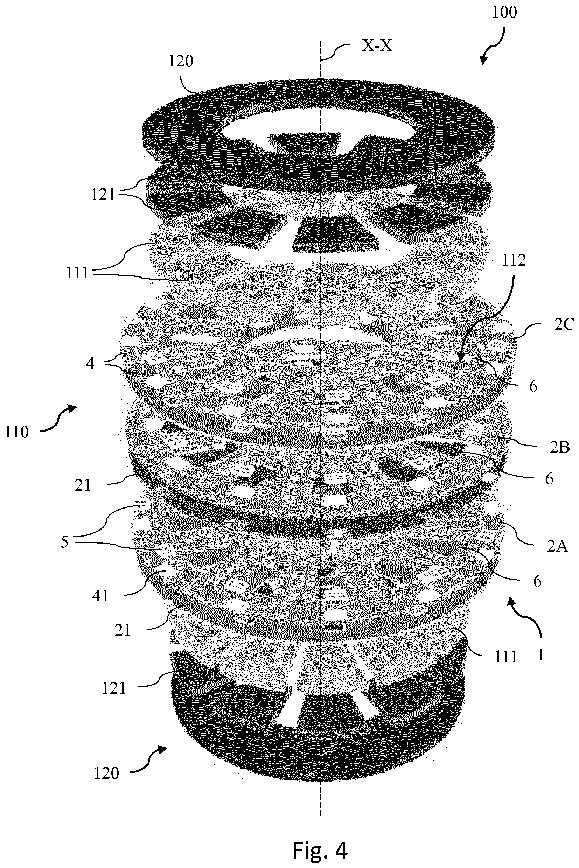

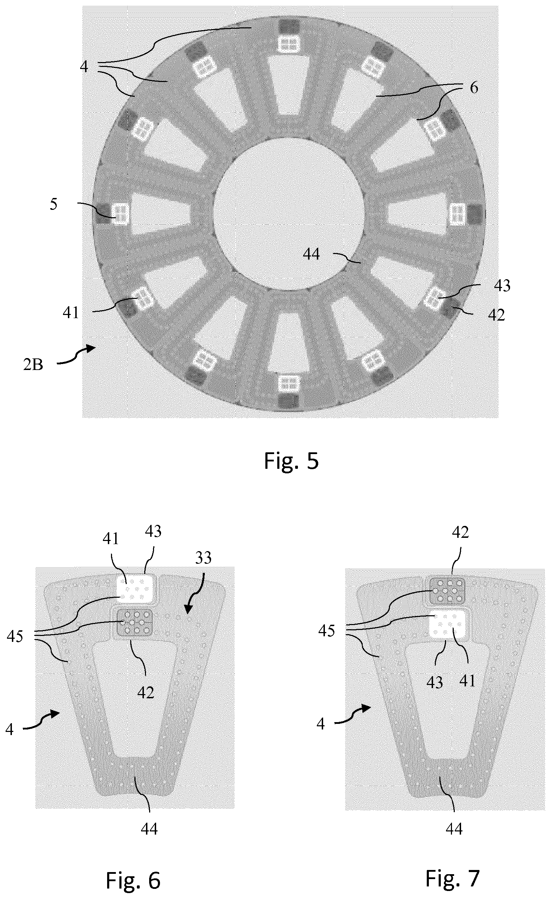

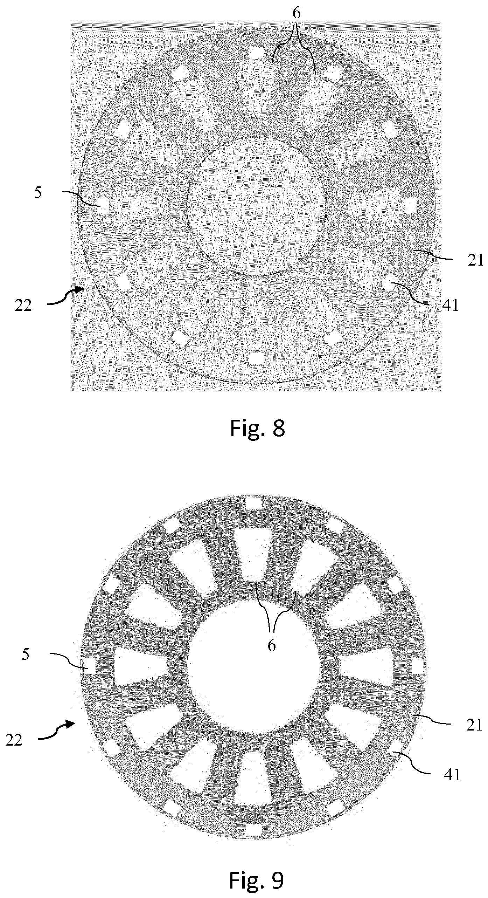

Therefore, the connecting material 5 and the electrically insulating glue 21 define a substrate between adjacent layers 2A, 2B. The substrate may have a thickness that ranges, for instance, from 20 to 100 µm, and is preferably 50 µm. Figures 8 and 9 show examples of substrates 22, in which the arrangement of the electrically insulating glue 21, the fixation portions, and the arrangement of the connecting material 5 applied to the connecting portions 41 are visible. The two examples relate to the connection between first and second layers 2A, 2B, and between second and third layers 2B, 2C, in the embodiment as shown in Figures 3 to 9.

The connecting material 5 may be an electrically conductive paste, optionally providing adhesion to the second surfaces of the conductive tracks 4. One example of electrically conductive paste is a glue containing metal micro-granules, in particular silver micro-granules. The metal micro-granules preferably represent at least 60 % by weight of the electrically conductive paste.

It shall be noted that this glue may have a curing temperature of less than 200°C, particularly ranging from 100 to 180°C, for instance equal to 140°C. Advantageously the glue may be used without damaging the insulating support 3, when this is formed with the typical materials of PCB supports.

An alternative electrically conductive paste is a metal paste solder, e.g. a tin-based paste. In another embodiment, the connecting material 5 is provided as a foil between adjacent layers 2A, 2B, at least partially impregnated with an electrically conductive paste or solution. For example, the foil may be totally impregnated and be placed only at the connecting portions 41, or the foil may extend along a major portion of the opposite surfaces of the adjacent layers 2A, 2B and be impregnated with the conductive solution only at the connecting portions 41.

With the application of the connecting material 5 on the second surfaces, the conductive tracks 4 of a large number of layers 2A, 2B, 2C may be electrically connected to each other in a reliable and highly flexible manner. This is because the tracks 4 may be connected exactly in the desired region, with an adequate section even at high currents, with the connection not affecting other layers 2A, 2B, 2C.

In addition, the holes extending through various layers 2A, 2B, 2C will not have to be metallized using procedures that are only effective for limited thicknesses, or have high costs.

This will provide a circuit 1 with a greater overall thickness than the prior art, for example greater than 1 cm, preferably ranging from 2 to 10 cm. Such thicknesses, also due to the rigidity of a common insulating support 3 for printed circuit boards, will provide a highly rigid and sturdy structure, that can support the magnetic cores 111 possibly fixed thereto, for example, by means of a resin.

The circuit 1 has a plurality of seats 112 with cores 111 housed therein. Therefore, no additional support structure will be needed to fix both the cores 111 and the windings 113 of the circuit 1. In other words, the circuit 1 is itself a support structure for the plurality of cores 111, whereas the conductive tracks 4 are supported on the faces 31, 32 of the insulating supports 3 of each of the layers 2A, 2B, 2C. The embodiment of the stator 110 having special support structures for the cores 111 and the conductive tracks 4 simplifies mass production and reduces costs.

More in detail, each layer 2A, 2B, 2C has a plurality of apertures 6 and the apertures 6 of various layers 2A, 2B, 2C are in mutually facing relationship to define the seats 112 with cores 111 housed therein. The conductive windings are each arranged around a respective seat 112, i.e. the conductive tracks 4 are each arranged around a respective aperture 6, to induce a magnetic field in the cores 111 when current flows therethrough.

More in detail, each conductive track 4 forms a winding turn, and only a single winding turn, arranged around a respective seat 112, and accordingly around a respective aperture 6 of the layer 2A. In addition, the layer 2A is organized into sectors, each comprising an aperture 6 and two opposite conductive tracks 4 arranged to form a winding turn around the aperture 6. It shall be noted that the conductive tracks 4 of different sectors of the layer 2A are independent of one another, i.e. are not electrically connected together within the layer 2A.

As used herein, the term winding turn is intended to designate a continuous route surrounding a central area only once. Therefore, the winding turn has a substantially annular shape, without limitation to circular rings or polygonal shapes or other shapes formed by curved, broken or mixed lines. It shall be noted that the conductive tracks 4 define open winding turns, i.e. having two ends, as further explained below. The two ends are close to each other.

Each winding turn extends about its respective axis, and the winding number of a winding turn with respect to its axis is substantially equal to 1, which means that the winding turn extends angularly through about 360° about its axis. Since the winding turns are open, the winding number of a single winding turn is not necessarily an integer, but may range, for example, from 0.8 to 1.2, and likewise the angle of the angular extent of the corresponding route may range from 300° to 420°.

The presence of only a single winding turn for each conductive track 4 improves heat dissipation in the motor. With a single winding turn, the conductive material of each conductive track 4 forms a direct and unbroken heat bridge between the central passage of the stator 110 in which the drive shaft is located, and the outer surface of the stator 110. Similarly, a unique direct and unbroken bridge is formed between each aperture 6 and the central passage, and between each aperture 6 and the outer surface of the stator 110.

Conversely, if two winding turns were provided for each conductive track 4, namely an inner winding turn and an outer winding turn, heat dissipation from the internal winding turn, i.e. the winding turn that is closest to its respective aperture 6, would be considerably more difficult. It should be noted, for example, that any heat transferred from the apertures 6 to the inner passage or the outer surface of the stator would pass across the inner winding turn, the outer winding turn and an area with no conductive material that is radially arranged between the winding turns.

Optionally, some additional thermally conductive material might be placed in the substrate between two distinct layers 2A, 2B, 2C for dissipation of the heat generated in the conductive tracks 4. An example of such material is carbon nanotubes. If the chosen material has high electrical conduction properties, the thermally conductive material will preferably have no winding turns, and will not electrically join distinct end portions 42, 43 of the conductive tracks 4.

In the illustrated motor 100 each layer comprises a first plurality of conductive tracks 4 associated with a first face 31 of the support 3, and a second plurality of conductive tracks 4 associated with a second face 32 of the support 3 opposite to the first face. More in detail, each layer 3 comprises two opposite tracks 4 for each polar region of the stator 100, i.e. two opposite tracks 4 for each aperture 6 and/or for each sector.

It shall be noted that all the tracks 4 associated one seat 112 of the stator 110 are in such an arrangement as to conduct a predetermined amount of current around the seat 112 with a common winding orientation, e.g. clockwise or anticlockwise (as seen from the same side of the motor).

More in detail, for each seat 112, the conductive tracks 4 of different layers 2A, 2B, 2C which are arranged around the seat 112 define together a conductive path that forms a plurality of winding turns arranged around the seat 112. These tracks are mutually connected between adjacent layers through the connecting material 5, as explained above. It shall be noted that the organization of the layers 2A, 2B, 2C into independent sectors also allows the conductive paths for separate seats to be independent of one another. In other words, the conductive tracks 4 that form a particular conductive path are arranged to form winding turns around a single unique seat 112, and are not arranged around other seats 112.

In any case, in addition to the layers 2A, 2B, 2C with tracks 4 on both faces and independent sectors, as described hereinbefore, the circuit 1 may also comprise end panels with electrical connections formed therein between the conductive paths of the different seats 112. For example, the plurality of layers 2A, 2B, 2C may be arranged between a pair of end panels.

Each conductive track 4 has a first end portion 42, a second end portion 43, and an intermediate portion 44 which connects the end portions 42, 43.

The formation of the conductive path of one seat requires, in addition to the presence of the connecting material 5, electrical connection of the pairs of opposite conductive tracks 4 on the two opposite sides of each insulating support 3. Preferably, for this purpose, the insulating support 3, as well as any intermediate insulating level, has a perforated portion 33 in which at least one metallized hole 45 is formed. In the embodiments of the figures a plurality of metallized holes 45 are always shown. Nevertheless, the circuit 1 may be also formed without metallized holes extending through the entire longitudinal thickness of the circuit. Instead, the metallized holes 45 that connect the tracks 4 on the two faces 31, 32 of the same insulating support 3 contain a metal that does not directly contact the adjacent layers 2A, 2B, 2C.

More in detail, the perforated portions 33 extend at least at the first end portions 42 of the conductive tracks 4. Accordingly, the connecting portions 41 extend at least in the second end portions 43 of the conductive tracks 4. Depending on the arrangement of the holes 45 and connecting material 5, successive conductive tracks 4, on adjacent layers 2A, 2B or on opposite faces 31, 32 of the same insulating support 3, may be connected in series or in parallel.

It shall be understood that, outside of the perforated portions 33, the insulating support 3 is interposed between the tracks 4 on the opposite faces 31 of the same layer 2A, thereby preventing direct electrical contact therebetween. In particular, the insulating support 3 outside the perforated portions 33 is free of holes.

Generally, an electric current may flow between two conductive tracks 4 of the same layer 2A through the perforated portion 33. Furthermore, the electric current may flow between two conductive tracks 4 of two adjacent layers 2A, 2B through the connecting portion 41. Of course, as the current flows from a perforated portion 33 to a connecting portion 41 it may follow the conductive track 4 from the first to the second end portion 42, 43, along the intermediate portion 44 (or vice versa from the connecting portion 41 to the perforated portion 33).

In a first embodiment, as particularly shown in Figures 3 to 9, the tracks 4 on opposite faces 31, 32 of the insulating supports 3 arc connected in parallel. Therefore, the perforated portions 33 have a plurality of metallized holes 45 arranged at the first and second end portions 42, 43, and preferably also at the intermediate portions 4, of the conductive tracks 44.

This embodiment is conveniently used when the aforementioned intermediate conductive and insulating levels are present. In the conductive levels the conducting material may comprise an intermediate conductive route with the same arrangement of conductive tracks 4. Therefore, the conductive layer is electrically connected to the two opposite conductive tracks 4, in parallel therewith, through the metallized holes 45, substantially throughout its length.

Conversely, the connecting portions 41 with the connecting material 5 are only arranged in the second end portions 43 of the conductive tracks 4. Therefore, the tracks 4 of the distinct layers 2A, 2B, 2C are connected in series.

Thus, this embodiment minimizes the resistance associated with the flow of current between the opposite faces 31, 32 of the insulating supports 3.

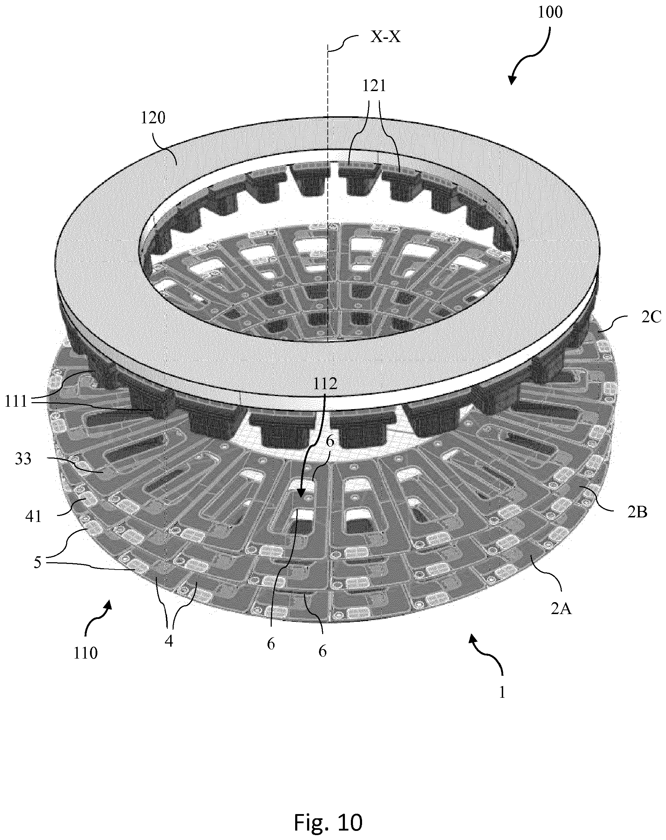

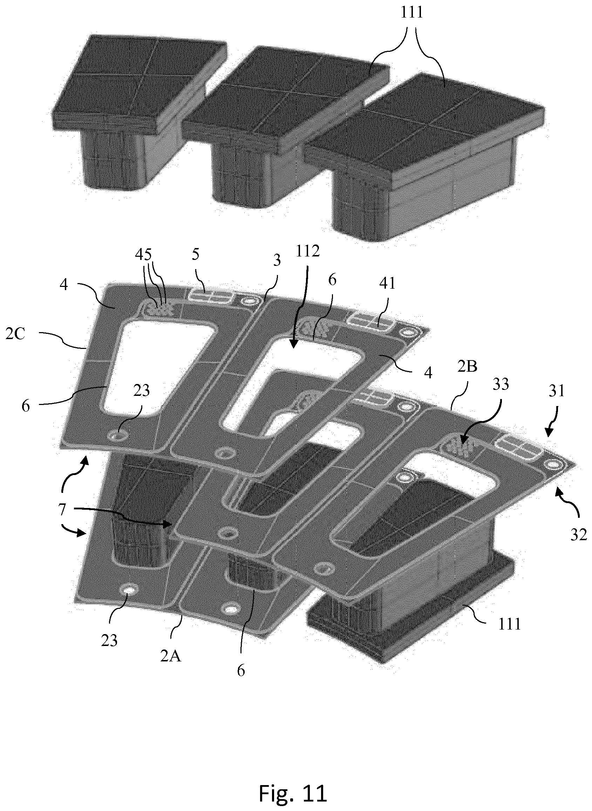

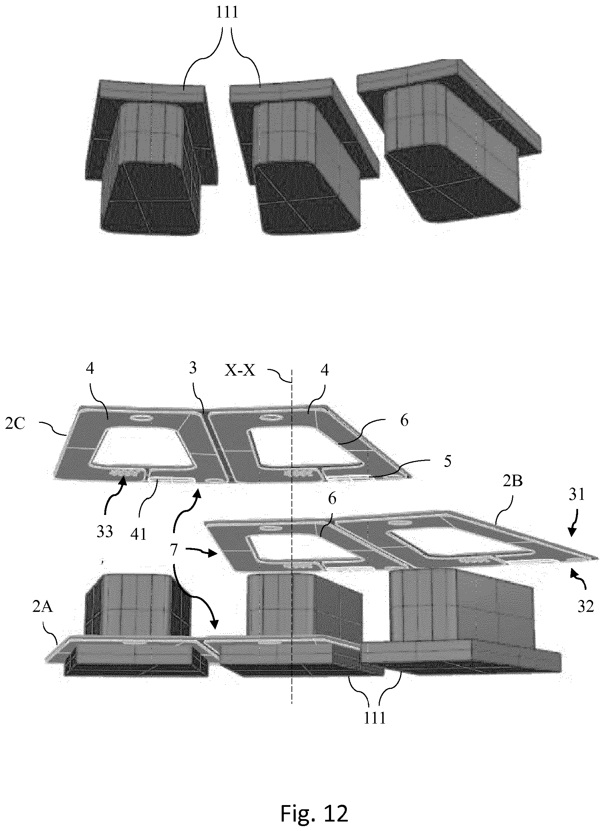

In a second embodiment (Figures 10 to 14), the perforated portions 33 only extend at the first end portions 42. In other words, the tracks 4 on opposite faces of the insulating support 3 are connected in series.

Yet in this embodiment the conductive tracks 4 of two adjacent layers 2A, 2B are always connected in series. Therefore, the connecting portions 41 are placed at least in the second end portions 43 of the conductive tracks 4. This will maximize the number of winding turns of each conductive path around each magnetic core 111, with a given number of layers 2A, 2B, 2C.

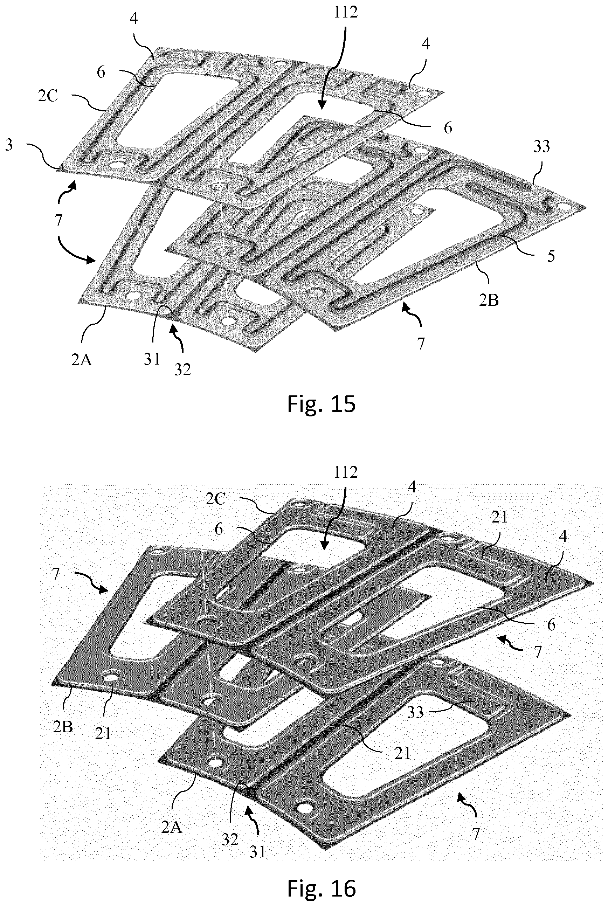

In a third embodiment, as shown in Figures 15 to 20, the successive conductive tracks 4 of two adjacent layers 2A, 2B are connected in parallel, whereas the tracks 4 on the opposite faces 31, 32 of one layer 2a arc connected in series. In particular, the perforated portions 33 only extend at the first end portions 42. Furthermore, the perforated portions 33 extend at the first and second end portions 42, 43, and preferably also at the intermediate portions 44, of the conductive tracks 4 Thus, the connecting portions 41 have such an extent as to minimize the resistance associated with the flow of current between the tracks 4 of two adjacent layers 2A, 2B.

In any case, at least in this embodiment in which the connecting portions 41 have a greater extent, the connecting portions 41 will be preferably located between two lateral edges 46 of the conductive tracks 4 and be spaced apart from these lateral edges 46, to prevent the risk that the connecting material 5 may create short circuits between different portions of a single track 4. Furthermore, the fixation portions with the electrically insulating glue 21 applied thereon extend at least along the lateral edges 46 of the conductive tracks 4. This ensures a better electrical insulation of the tracks 4 and the connecting material 5 from any foreign agents.

It shall be noted that in the embodiments as disclosed herein, a limited number of layouts of conductive tracks 4 and arrangements of the perforated portions 33 and the connecting portions 41 may be repeated for the various layers 2A, 2B, 2C and on opposite faces 31, 32 of the layers. The arrangements of the perforated portions 33 or the connecting portions 41, in particular, may be deemed to correspond to each other when the perforated portions 33 or the connecting portion 41 for the various layers 2A, 2B, 2C are aligned in the longitudinal direction X-X.

More in detail, in the embodiment of Figures 3 to 9, the tracks 4 associated with the opposite faces 31, 32 of each layer are symmetrical with respect to the insulating support 3. The pattern of the tracks 4 is also reproduced for each layer 2A, 2B, 2C. Also, the perforated portions 33 have the same arrangement in all the layers 2A, 2B, 2C. However, the arrangement of the connecting portions 41 repeats only in alternating layers.

In the embodiment of Figures 10 to 14, the perforated portions 33 have the same arrangements in all the layers 2A, 2B, 2C. Similarly, also the connecting portions 41 have the same arrangements in all the layers 2A, 2B, 2C. The pattern of the tracks 4 is reproduced in each layer 2A, 2B, 2C, but in each layer the tracks 4 on the opposite faces 31, 32 have different (i.e. neither identical nor symmetrical) patterns.

Finally, in the embodiment of Figures 15-20 the arrangements of the perforated portions 33 and the connecting portions 41 are repeated only in alternating layers 2A, 2B, 2C. Similarly, the patterns of the tracks 4 are repeated in alternating layers 2A, 2B, 2C. Furthermore, the tracks 4 on the opposite faces 31, 32 of each layer have different patterns.

These conditions facilitate mass production of the circuit 1, and also ensure that current will flow through all the tracks 4 around a seat 112 with a common winding orientation. Preferably, each layer 2A, 2B, 2C of the multilayer electric circuit 1 is divided into a plurality of juxtaposed modules 7. In particular, the modules 7 of one layer 2A are angularly juxtaposed about the axis of rotation of the rotor 120. This is shown, for instance, in the embodiments of Figures from 10 to 20, and is obviously also applicable to the embodiment of Figures 3 to 9.

Each module 7 has a plurality of apertures 6, for example two apertures 6. In other words, each module 7 is organized into at least two sectors. Therefore, each module 7 comprises at least two tracks 4 for each face 31 of the insulating support 3, i.e. four tracks 4 per module 7. Each of the tracks 4 extends around a respective aperture 6.

In the preferred embodiment, two apertures 6 of a module 7 of one layer 2A face openings 6 of two distinct modules 7 of one layer 2B adjacent thereto.

In other words, the modules 7 of adjacent layers 2A, 2B are angularly offset from each other, particularly by one half of their angular amplitude. 3 to 36 modules 7 arc preferably provided on each layer, over an angular width that ranges from 10° to 120°, and with an angular offset between the modules of adjacent layers 2A, 2B ranging from 5° to 60°. In the preferred embodiment there are 12 modules per layer, with an angular width of 30° and a staggering of 15°.

With a similar angular staggering, two adjacent modules 7 of one layer 2A are indirectly fixed together because both are glued to one module 7 of the adjacent layer 2B. This will impart the required rigidity to the stator 100, even when no prior art support structure for supporting the windings 113 and the cores 111 is provided.

The provision of each layer 2A, 2B, 2C divided into modules 7, instead of a unique module 7 having a circular or annular shape can save material for the insulating supports 3 during fabrication of the printed circuit boards.

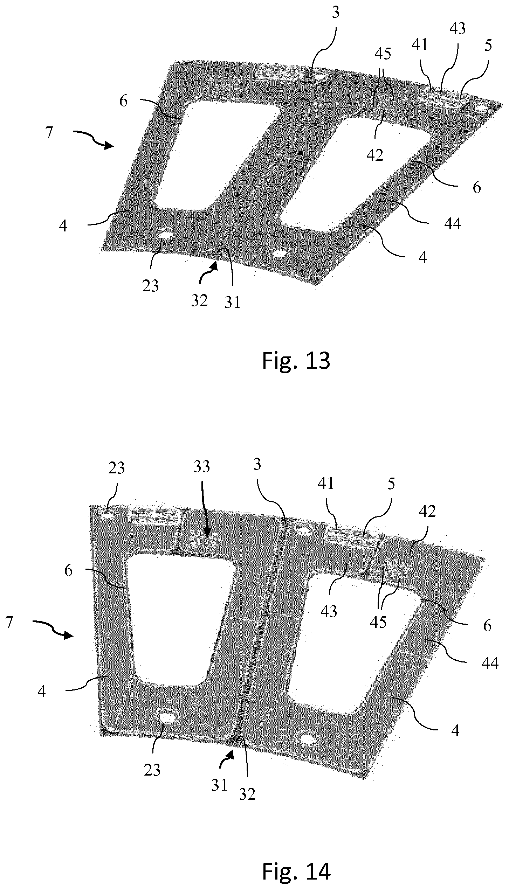

It should be also noted that, if the embodiment of Figures 10 to 14 is used, the entire circuit 1 may be fabricated by forming and mounting a plurality of modules 7 of one type. The two faces 31, 32 of the module 7 are shown in Figures 13 and 14.

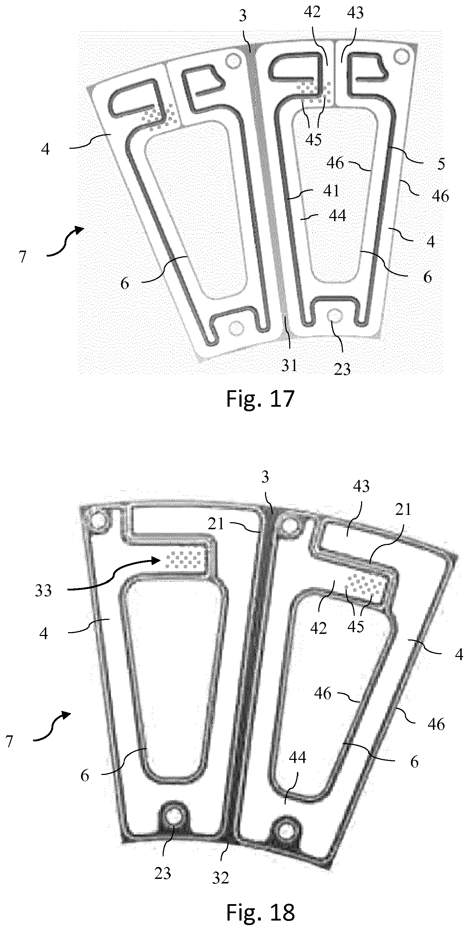

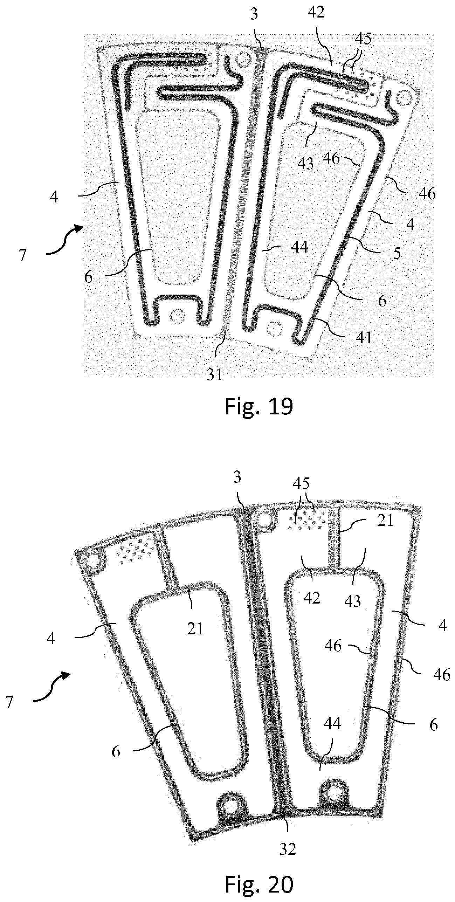

On the other hand, in the embodiment of Figures 15 to 20 a plurality of modules 7 of two distinct types are required for the various layers 2A, 2B, 2C. The first type of module 7 is shown in Figures 17 and 18, and the second type is shown in Figures 19 and 20.

In particular, the circuit 1 may be formed with the inventive method as described below. First, a plurality of layers 2A, 2B, 2C have to be provided, including at least one first layer and one second layer 2A, 2B. For each layer 2A, 2B, 2C, the conductive tracks 4 may be assembled on the insulating supports 3, and the metallized holes 45 may be formed with known techniques, once their shape and arrangement have been defined.

In this initial step, the layers 2A, 2B, 2C may be also provided as modules 7, which are not connected to each other here.

While the assembly of the first and of the second layers 2A, 2B will be described in greater detail, it shall be understood that the process may be repeated for greater numbers of layers 2A, 2B, 2C.

The method includes applying the connecting material 5 to the second surfaces of the conductive tracks 4 of the first or the second layer 2A, 2B at respective connecting portions 41. In addition, if the various layers are to be fixed together with an electrically insulating glue 21, the glue 21 will be applied on the fixation portions of the first or second layer 2A, 2B.

Of course, the connecting material 5 and the electrically insulating material 21 which are designed to form a substrate 22 between the first and the second layers 2A, 2B may be irrespectively applied on the first lower layer 2A only, on the second (upper) layer 2B, or on both. For example, in the preferred method the connecting material 5 is applied to the first layer 2A (on the top face 31) and the electrically insulating material 21 is applied to the second layer 2B (on the bottom face 32).

The connecting material 5 and/or the electrically insulating material 21 may be applied, for example, by screen printing, or with the interposition of a perforated mask (stencil).

The method continues with the step of arranging the first and second layers 2A, 2B in facing relationship by providing an electrical connection between conductive tracks 4 of the first and second layers 2A, 2B through the connecting material 5. For example, the first and second layers 2A, 2B may lay one on top of the other.

Of course, proper alignment of the layers 2A, 2B should be ensured, for the connecting material 5 and the possible electrically insulating glue 21 to be placed in the desired position with respect to the conductive tracks 4 of the opposite layer. Preferably, the step of placing the first and second layers 2A, 2B in facing relationship comprises aligning the apertures 6 of the first and second layers 2a, 2B in the longitudinal direction X-X to thereby define the scats 112 for receiving the cores 111.

Furthermore, in the preferred embodiment each layer 2A, 2B, 2C has at least one alignment hole 23, and the step of arranging the first and second layers 2A, 2B in facing relationship comprises aligning the alignment holes 23 of the first and second layers 2A, 2B in the longitudinal direction X-X. For example, two alignment holes 23 may be provided for each conductive track 4. The alignment holes 23 may be mutually aligned by inserting an alignment rod (not shown) therein, and removing it after fixation of the layers 2A, 2B, 2C. The material of the alignment rod preferably has low adhesion to the connecting material 5 and the electrically insulating glue 21 and may be, for example, Teflon.

If the layers 2A, 2B, 2C of the circuit 1 are divided into modules 7, the step of arranging the first and second layers 2A, 2B in facing relationship also includes juxtaposing the modules 7 of the first layer 2A and arranging the modules 7 of the second layer 2B on the first layer 2A in offset relationship to the modules 7 of the first layer 2A.

Lastly, a step of fixing the first and the second layers 2A, 2B to each other is provided.

This will complete the structure that supports the conductive tracks 4 incorporated therein, which is also designed to support the cores 111, if any. The layers 2A, 2B, 2C may be fixed together by baking or drying the electrically insulating glue 21, preferably at a temperature ranging from 100 to 200°C, for curing.

It shall be noted that, if the circuit has more than two layers 2A, 2B, 2C, the step of fixing the layers together is preferably carried out only once when each layer has been placed in facing relationship to and in contact with the next one (with the interposition of the substrate 22, i.e. the connecting material 5 and possibly the insulating glue 21). Alternatively, each layer 2B may be fixed to the previous one 2A before locating the next layer 2C.

If cores 111 arc provided, then the method includes the steps of inserting and fixing the cores 111 in the seats 112. The cores 111 are fixed in the seats 112, for example, by means of an electrically insulating material such as the one described for the fixation of the layers 2A, 2B, 2C. These glues may be baked or dried simultaneously in a single step for mutual fixation of the various layers 2A, 2B, 2C and for fixation of the cores 111 in the seats 112.

As all the layers A2A 2B, 2C are fixed together, the conductive tracks 4 are also fixed to each other and immobilized in their final position. It shall be noted that the method generally does not include steps of individual fixation of the windings and cores to support structures other than that obtained with the fixation of the layers 2A, 2B, 2C. This greatly simplifies the fabrication of the motor as compared with the prior art.

In the embodiment of Figures 3 to 9, a more stable electrical connection may be obtained at the connecting material 5 by providing a step of heating or melting the electrically conductive paste independent of any heating provided for the fixation of the layers 2A, 2B, 2C.

Here, the step of providing the electric connection comprises transferring heat to the connecting material 5 through at least one of the metallized holes 45 of the second layer 2B arranged at one of the connecting portions 41, in particular the second end portions 43. This step is carried out once the first and the second layers 2A, 2B are placed in mutual contact, with heat being transferred from on one side of the second layer 2B opposite to the first layer 2A.

For example, in one embodiment, transferring heat to the connecting material 5 comprises placing a heating surface of a heating tool (not shown) on the second layer 2B at such hole 45 from one side opposite to the connecting material 5.

Alternatively, or to provide additional heat, the hole 45 through which heat transfer is to occur may be formed with a metallized edge surrounding a central opening. This may be also provided for the other metallized holes 45, otherwise other holes 45, such as those arranged at the intermediate portions 44 of the conductive tracks 4, may be solid, without central openings, possibly with a smaller diameter.

Here, the step of transferring heat to the connecting material 5 comprises inserting a heating tip of a heating tool into the central opening of the hole 45 designed for heat transfer. In the preferred embodiment, a single heating tool may comprise at least one head having a heating surface resting against the hole 45 and at least one heating tip projecting out of the heating surface to fit into the central opening of the hole 45.

Such tool may be equipped with a plurality of heads, each having a plurality of tips, to simultaneously heat all the connecting portions 41 of one layer 2A, 2B, 2B, through a plurality of holes 45 for each connecting portion 41, in the corresponding perforated portions 33.

These features are obviously available if at least partial longitudinal alignment is provided between the metallized holes 45 of the perforated portions 33 and the connecting material 5 in the connecting portions 41.

It will be appreciated from the above described method that, with these steps, the circuit 1 may be easily fabricated by mass production, according to one of the predetermined objects.

Furthermore, the large number of layers 2A, 2B, 2C, the wide section of the conductive tracks 4, each arranged as a single winding turn, and the connecting material 5, the presence of magnetic cores 111, as well as heat dissipation facilitated by the material of the insulating support 3 provide motors 100 with relatively high peak powers. The rotating electric machine 100 may particularly have a peak power that ranges from 20 to 500 kW, preferably from 50 to 300 kW, and in the preferred embodiment is equal to 170 kW.

A skilled person may obviously envisage a number of equivalent changes to the above disclosed embodiments, without departure from the scope of the appended claims.

## Claims

1. A stator (110) for an axial flux electric motor (100), the stator (110) comprising a multilayer electric circuit (1) and a plurality of cores (111) made of a ferromagnetic material, the multilayer electric circuit (1) having a plurality of seats (112) in which the cores (111) are housed,
wherein the multilayer electric circuit (1) comprises a plurality of mutually fixed layers (2A, 2B, 2C), each layer (2A, 2B, 2C) being organized into sectors and comprising:
- an insulating support (3) having a first and a second flat and parallel opposite faces (31, 32),
- an aperture (6) for each sector, the apertures (6) of different layers (2A, 2B, 2C) facing each other to define said seats (112),
- at least two opposite conductive tracks (4) for each sector which are arranged around the respective aperture (6), which are fixed to the insulating support (3) and electrically connected to each other, a first plurality of the conductive tracks (4) being associated with said first face (31) of the insulating support (3), and a second plurality of the conductive tracks (4) associated with said second face (32) of the insulating support (3), each conductive track (4) having a first surface facing its respective insulating support (3) and a second surface opposite to the first surface, each conductive track (4) forming one and only one winding turn arranged around a respective seat (112) to induce a magnetic field in the respective core (111),
wherein, for each seat (112), the conductive tracks (4) of different layers (2A, 2B, 2C) which form respective winding turns around the seat (112) are connected to one another and define together a conductive path that forms a plurality of winding turns arranged around the seat (112),
wherein the conductive tracks (4) of each layer (2A, 2B, 2C) which are relative to different sectors are not electrically connected together within their layer (2A, 2B, 2C),
wherein the second surface of each conductive track (4) has a connecting portion (41), the conductive tracks (4) of adjacent layers (2A, 2B, 2C) of the conductive path of each seat (112) being electrically connected to one another by means of an electrically conductive connecting material (5) applied at the connecting portions (41) of the respective second surfaces.

2. A stator (110) as claimed claim 1, wherein the connecting material (5) comprises an electrically conductive paste, which preferably contains metal micro-granules or is a metal paste solder.

3. A stator (110) as claimed in claim 1 or 2, wherein, for each layer (2A, 2B, 2C), the insulating support (3) has a perforated portion (33) in which at least one metallized hole (45) is formed, which electrically connects the opposite conductive tracks (4) of the layer (2A, 2B, 2C).

4. A stator (110) as claimed in claim 3, wherein:
- each conductive track (4) has a first end portion (42), a second end portion (43), and an intermediate portion (44) which connects the end portions (42, 43),
- the perforated portions (33) extend at least at the first end portions (42) of the conductive tracks (4), and
- the connecting portions (41) extend at least within the second end portions (43) of the conductive tracks (4).

5. A stator (110) as claimed in claim 4, wherein the perforated portions (33) have a plurality of metallized holes (45) arranged at the first and second end portions (42, 43) and the intermediate portions (44) of the conductive tracks (4).

6. A stator (110) as claimed in claim 5, wherein each layer (2A, 2B, 2C) comprises a plurality of intermediate levels between the insulating support (3) and at least one conductive track (4), the intermediate levels comprising:
- at least one insulating level adjacent to said conductive track (4), the insulating level preferably having a smaller thickness than the insulating support (3), and
- at least one conductive level between the insulating level and the insulating support (3), the conductive level comprising an intermediate conductive route electrically connected to said conductive track (4) via said metallized holes (45).

7. A stator (110) as claimed in claim 4, wherein the connecting portions (41) extend at the first and second end portions (42, 43) and along the intermediate portions (44) of the conductive tracks (4).

8. A stator (110) as claimed in any of claims 1 to 7, wherein:
- each layer (2A, 2B, 2C) of the multilayer electric circuit (1) is divided into a plurality of adjacent modules (7),
- each module (7) has a plurality of apertures (6), the apertures (6) of the modules (7) of distinct layers (2A, 2B, 2C) facing each other to define said seats (112), two openings (6) of one module (7) of one layer (2A) facing the apertures (6) of two distinct modules (7) of one adjacent layer (2B).

9. An axial flux electric motor (100) comprising:
- a stator (110) as claimed in any one of claims 1 to 8, and
- a rotor (120) rotatably connected to the stator (110) about an axis that extends in a longitudinal direction (X-X), the rotor (120) comprising a plurality of polar regions facing the stator (110) in the longitudinal direction (X-X).

10. A method of manufacturing a stator (110) as claimed in any of claims 1 to 8, comprising:
- providing a first and a second layer (2A, 2B), each layer (2A, 2B) being organized into sectors and comprising an insulating support (3) having a first and a second flat and parallel opposite faces (31, 32), the insulating support (3) having an aperture (6) for each sector, and at least two opposite conductive tracks (4) for each sector, which are fixed to the insulating support (3) and are electrically connected to each other, the conductive tracks (4) of each layer (2A, 2B, 2C) which are relative to different sectors not being electrically connected together within their layer (2A, 2B, 2C), a first plurality of the conductive tracks (4) being associated with said first face (31) of the insulating support (3), and a second plurality of the conductive tracks (4) associated with said second face (32) of the insulating support (3), each track (4) having a first surface facing its respective support (3) and a second surface opposite to the first surface, each conductive track (4) forming one and only one winding turn arranged around a respective aperture (6),
- applying an electrically conductive connecting material (5) to second surfaces of conductive tracks (4) of the first or the second layer (2A, 2B) at respective connecting portions (41),
- placing the first and second layers (2A, 2B) in facing relationship, so that the apertures (6) of the first and second layers (2A, 2B) will face each other, to thereby form a plurality of seats (112), and to create an electrical connection between conductive tracks (4) of the first and second layers (2A, 2B) by means of the connecting material (5), thus defining, for each seat (112), a conductive path defined by said conductive tracks (4), which forms a plurality of winding turns arranged around the seat (112),
- fixing the first and the second layers (2A, 2B) to each other, and
- housing a core (111) made of a ferromagnetic material in each respective seat.

11. A method as claimed in claim 10, wherein:
- the at least two opposite conductive tracks (4) of one layer (2A, 2B) are electrically connected to each other via a plurality of metallized holes (45) formed in the insulating support (3), at least one hole (45) of the second layer (2B) being situated at a connecting portion (41),
- the step of providing the electric connection comprises transferring heat to the connecting material (5) through said hole (45).

12. A method as claimed in claim 11, wherein said hole (45) has a metallized edge that surrounds a central opening, the step of transferring heat to the connecting material (5) comprising inserting a heating tip of a heating tool in the central opening of the hole (45).

13. A method as claimed in claim 11 or 12, wherein transferring heat to the connecting material (5) comprises placing a heating surface of a heating tool on the second layer (2B) at said hole (45) from a side opposite to the connecting material (5).

## Patentansprüche

1. Stator (110) für einen Axialfluss-Elektromotor (100), wobei der Stator (110) eine mehrschichtige elektrische Schaltung (1) und eine Vielzahl von Kernen (111) aus einem ferromagnetischen Material umfasst, wobei die mehrschichtige elektrische Schaltung (1) eine Vielzahl von Sitzen (112) aufweist, in denen die Kerne (111) untergebracht sind,
wobei die mehrschichtige elektrische Schaltung (1) eine Vielzahl von gegenseitig fixierten Schichten (2A, 2B, 2C) umfasst, wobei jede Schicht (2A, 2B, 2C) in Sektoren organisiert ist und umfasst:
- einen isolierenden Träger (3) mit einer ersten und einer zweiten flachen und parallelen gegenüberliegenden Fläche (31, 32),
- eine Öffnung (6) für jeden Sektor, wobei die Öffnungen (6) verschiedener Schichten (2A, 2B, 2C) einander gegenüberliegen, um die Sitze (112) zu definieren,
- mindestens zwei gegenüberliegende Leiterbahnen (4) für jeden Sektor, die um die jeweilige Öffnung (6) herum angeordnet sind, die an dem isolierenden Träger (3) befestigt und elektrisch miteinander verbunden sind, wobei eine erste Vielzahl der Leiterbahnen (4) mit der ersten Fläche (31) des isolierenden Trägers (3) verbunden ist, und eine zweite Vielzahl der Leiterbahnen (4), die der zweiten Fläche (32) des isolierenden Trägers (3) zugeordnet sind, wobei jede Leiterbahn (4) eine erste Oberfläche aufweist, die ihrem jeweiligen isolierenden Träger (3) zugewandt ist, und eine zweite Oberfläche, die der ersten Oberfläche gegenüberliegt, wobei jede Leiterbahn (4) eine und nur eine Wicklungswindung bildet, die um einen jeweiligen Sitz (112) angeordnet ist, um ein Magnetfeld in dem jeweiligen Kern (111) zu induzieren,
wobei für jeden Sitz (112) die Leiterbahnen (4) verschiedener Schichten (2A, 2B, 2C), die jeweiligen Windungen um den Sitz (112) herum bilden, miteinander verbunden sind und zusammen einen leitenden Pfad definieren, der eine Vielzahl von Windungen bildet, die um den Sitz (112) herum angeordnet sind,
wobei die Leiterbahnen (4) jeder Schicht (2A, 2B, 2C), die sich auf verschiedene Sektoren beziehen, innerhalb ihrer Schicht (2A, 2B, 2C) nicht elektrisch miteinander verbunden sind, wobei die zweite Oberfläche jeder Leiterbahn (4) einen Verbindungsabschnitt (41) aufweist, wobei die Leiterbahnen (4) benachbarter Schichten (2A, 2B, 2C) der Leiterbahn jedes Sitzes (112) mittels eines elektrisch leitenden Verbindungsmaterials (5), das an den Verbindungsabschnitten (41) der jeweiligen zweiten Oberflächen angebracht ist, elektrisch miteinander verbunden sind.

2. Stator (110) nach Anspruch 1, wobei das Verbindungsmaterial (5) eine elektrisch leitende Paste umfasst, die vorzugsweise Metallmikrogranulat enthält oder ein Metallpastenlot ist.

3. Stator (110) nach Anspruch 1 oder 2, wobei für jede Schicht (2A, 2B, 2C) der isolierende Träger (3) einen perforierten Abschnitt (33) aufweist, in dem mindestens ein metallisiertes Loch (45) ausgebildet ist, das die gegenüberliegenden Leiterbahnen (4) der Schicht (2A, 2B, 2C) elektrisch verbindet.

4. Stator (110) nach Anspruch 3, wobei:
- jede Leiterbahn (4) hat einen ersten Endabschnitt (42), einen zweiten Endabschnitt (43) und einen Zwischenabschnitt (44), der die Endabschnitte (42, 43) verbindet,
- die perforierten Abschnitte (33) sich zumindest an den ersten Endabschnitten (42) der Leiterbahnen (4) erstrecken, und
- die Verbindungsabschnitte (41) sich zumindest innerhalb der zweiten Endabschnitte (43) der Leiterbahnen (4) erstrecken.

5. Stator (110) nach Anspruch 4, wobei die perforierten Abschnitte (33) eine Vielzahl von metallisierten Löchern (45) aufweisen, die an den ersten und zweiten Endabschnitten (42, 43) und den Zwischenabschnitten (44) der Leiterbahnen (4) angeordnet sind.

6. Stator (110) nach Anspruch 5, wobei jede Schicht (2A, 2B, 2C) eine Vielzahl von Zwischenebenen zwischen dem isolierenden Träger (3) und mindestens einer Leiterbahn (4) umfasst, wobei die Zwischenebenen umfassen:
- mindestens eine an die Leiterbahn (4) angrenzende Isolierebene, wobei die Isolierebene vorzugsweise eine geringere Dicke als der isolierende Träger (3) aufweist, und
- mindestens eine leitende Ebene zwischen der isolierenden Ebene und dem isolierenden Träger (3), wobei die leitende Ebene eine dazwischenliegende leitende Strecke umfasst, die über die metallisierten Löcher (45) elektrisch mit der Leiterbahn (4) verbunden ist.

7. Stator (110) nach Anspruch 4, wobei sich die Verbindungsabschnitte (41) an den ersten und zweiten Endabschnitten (42, 43) und entlang der Zwischenabschnitte (44) der Leiterbahnen (4) erstrecken.

8. Stator (110) nach einem der Ansprüche 1 bis 7, wobei:
- jede Schicht (2A, 2B, 2C) der mehrschichtigen elektrischen Schaltung (1) in eine Vielzahl von benachbarten Modulen (7) unterteilt ist,
- jedes Modul (7) eine Vielzahl von Öffnungen (6) aufweist, wobei die Öffnungen (6) der Module (7) verschiedener Schichten (2A, 2B, 2C) einander zugewandt sind, um die Sitze (112) zu definieren, wobei zwei Öffnungen (6) eines Moduls (7) einer Schicht (2A) den Öffnungen (6) von zwei verschiedenen Modulen (7) einer benachbarten Schicht (2B) zugewandt sind.

9. Elektromotor (100) mit axialem Fluss, umfassend:
- einen Stator (110) nach einem der Ansprüche 1 bis 8, und
- einen Rotor (120), der drehbar mit dem Stator (110) um eine Achse verbunden ist, die sich in einer Längsrichtung (X-X) erstreckt, wobei der Rotor (120) eine Vielzahl von polaren Bereichen aufweist, die dem Stator (110) in der Längsrichtung (X-X) gegenüberliegen.

10. Verfahren zur Herstellung eines Stators (110) nach einem der Ansprüche 1 bis 8, umfassend:
- Bereitstellen einer ersten und einer zweiten Schicht (2A, 2B), wobei jede Schicht (2A, 2B) in Sektoren organisiert ist und einen isolierenden Träger (3) umfasst, der eine erste und eine zweite ebene und parallele gegenüberliegende Fläche (31, 32) aufweist, wobei der isolierende Träger (3) eine Öffnung (6) für jeden Sektor und mindestens zwei gegenüberliegende Leiterbahnen (4) für jeden Sektor umfasst, die auf dem isolierenden Träger (3) befestigt und elektrisch miteinander verbunden sind, wobei die Leiterbahnen (4) jeder Schicht (2A, 2B, 2C), die zu verschiedenen Sektoren gehören, innerhalb ihrer Schicht (2A, 2B, 2C) elektrisch miteinander verbunden sind, wobei eine erste Mehrzahl der Leiterbahnen (4) mit der ersten Fläche (31) des isolierenden Trägers (3) verbunden ist, und eine zweite Vielzahl der Leiterbahnen (4) mit der zweiten Fläche (32) des isolierenden Trägers (3) verbunden ist, wobei jede Bahn (4) eine erste Oberfläche, die ihrem jeweiligen Träger (3) zugewandt ist, und eine zweite Oberfläche, die der ersten Oberfläche gegenüberliegt, aufweist, wobei jede Leiterbahn (4) eine und nur eine Windung bildet, die um eine jeweilige Öffnung (6) herum angeordnet ist,
- Aufbringen eines elektrisch leitenden Verbindungsmaterials (5) auf zweite Oberflächen von Leiterbahnen (4) der ersten oder der zweiten Schicht (2A, 2B) an jeweiligen Verbindungsabschnitten (41),
- Anordnen der ersten und der zweiten Schicht (2A, 2B) in einander zugewandter Beziehung, so dass die Öffnungen (6) der ersten und der zweiten Schicht (2A, 2B) einander zugewandt sind, um dadurch eine Vielzahl von Sitzen (112) zu bilden, und Herstellen einer elektrischen Verbindung zwischen Leiterbahnen (4) der ersten und der zweiten Schicht (2A, 2B) mittels des Verbindungsmaterials (5), wodurch für jeden Sitz (112) ein durch die Leiterbahnen (4) definierter leitender Pfad definiert wird, der eine Vielzahl von um den Sitz (112) herum angeordneten Windungen bildet,
- Befestigen der ersten und der zweiten Schicht (2A, 2B) aneinander, und
- Aufnehmen eines Kerns (111) aus einem ferromagnetischen Material in jedem jeweiligen Sitz.

11. Verfahren nach Anspruch 10, wobei:
- die mindestens zwei gegenüberliegenden Leiterbahnen (4) einer Schicht (2A, 2B) über eine Vielzahl von in dem isolierenden Träger (3) ausgebildeten metallisierten Löchern (45) elektrisch miteinander verbunden sind, wobei sich mindestens ein Loch (45) der zweiten Schicht (2B) an einem Verbindungsabschnitt (41) befindet,
- der Schritt der Herstellung der elektrischen Verbindung die Übertragung von Wärme auf das Verbindungsmaterial (5) durch das Loch (45) umfasst.

12. Verfahren nach Anspruch 11, wobei das Loch (45) einen metallisierten Rand aufweist, der eine zentrale Öffnung umgibt, wobei der Schritt der Wärmeübertragung auf das Verbindungsmaterial (5) das Einführen einer Heizspitze eines Heizwerkzeugs in die zentrale Öffnung des Lochs (45) umfasst.

13. Verfahren nach Anspruch 11 oder 12, wobei das Übertragen von Wärme auf das Verbindungsmaterial (5) das Aufsetzen einer Heizfläche eines Heizwerkzeugs auf die zweite Schicht (2B) an dem Loch (45) von einer dem Verbindungsmaterial (5) gegenüberliegenden Seite aus umfasst.

## Revendications

1. Stator (110) pour un moteur électrique à flux axial (100), le stator (110) comprenant un circuit électrique multicouches (1) et une pluralité de noyaux (111) faits d'un matériau ferromagnétique, le circuit électrique multicouches (1) ayant une pluralité de sièges (112) dans lesquels les noyaux (111) sont logés, dans lequel le circuit électrique multicouches (1) comprend une pluralité de couches mutuellement fixes (2A, 2B, 2C), chaque couche (2A, 2B, 2C) étant organisée en secteurs et comprenant :
- un support isolant (3) ayant une première et une deuxième faces opposées, plates et parallèles (31, 32),
- une ouverture (6) pour chaque secteur, les ouvertures (6) de différentes couches (2A, 2B, 2C) se faisant face pour définir lesdits sièges (112),
- au moins deux pistes conductrices (4) opposées pour chaque secteur qui sont disposées autour de l'ouverture (6) respective, qui sont fixées au support isolant (3) et connectées électriquement l'une à l'autre, une première pluralité des pistes conductrices (4) étant associée à ladite première face (31) du support isolant (3) et une seconde pluralité de pistes conductrices (4) associées à ladite seconde face (32) du support isolant (3), chaque piste conductrice (4) ayant une première surface faisant face à son support isolant (3) respectif et une seconde surface opposée à la première surface, chaque piste conductrice (4) formant une et une seule spire d'enroulement disposée autour d'un siège respectif (112) pour induire un champ magnétique dans le noyau (111) respectif,
dans lequel, pour chaque siège (112), les pistes conductrices (4) des différentes couches (2A, 2B, 2C) qui forment des spires d'enroulement respectives autour du siège (112) sont connectées les unes aux autres et définissent ensemble un chemin conducteur qui forme une pluralité de spires d'enroulement disposées autour du siège (112),
dans lequel les pistes conductrices (4) de chaque couche (2A, 2B, 2C) qui sont relatives à des secteurs différents ne sont pas connectées électriquement ensemble à l'intérieur de leur couche (2A, 2B, 2C), où la seconde surface de chaque piste conductrice (4) a une partie de connexion (41), les pistes conductrices (4) des couches adjacentes (2A, 2B, 2C) du chemin conducteur de chaque siège (112) étant connectées électriquement les unes aux autres au moyen d'un matériau (5) de connexion électriquement conducteur appliqué aux parties de connexion (41) des secondes surfaces respectives.

2. Un stator (110) selon la revendication 1, dans lequel le matériau (5) de connexion comprend une pâte conductrice électriquement, qui contient de préférence des micro-granules métalliques ou est une soudure en pâte métallique.

3. Un stator (110) selon la revendication 1 ou 2, où, pour chaque couche (2A, 2B, 2C), le support isolant (3) présente une partie perforée (33) dans laquelle est formé au moins un trou métallisé (45) qui relie électriquement les pistes conductrices (4) opposées de la couche (2A, 2B, 2C).

4. Un stator (110) selon la revendication 3, où :
- chaque piste conductrice (4) a une première partie d'extrémité (42), une seconde partie d'extrémité (43), et une partie intermédiaire (44) qui relie les parties d'extrémité (42, 43),
- les parties perforées (33) s'étendent au moins au niveau des premières parties d'extrémité (42) des pistes conductrices (4) et
- les parties de connexion (41) s'étendent au moins à l'intérieur des secondes parties d'extrémité (43) des pistes conductrices (4).

5. Un stator (110) selon la revendication 4, dans lequel les parties perforées (33) ont une pluralité de trous métallisés (45) disposés au niveau des première et seconde parties d'extrémité (42, 43) et des parties intermédiaires (44) des pistes conductrices (4).

6. Un stator (110) selon la revendication 5, dans lequel chaque couche (2A, 2B, 2C) comprend une pluralité de niveaux intermédiaires entre le support isolant (3) et au moins une piste conductrice (4), les niveaux intermédiaires comprenant :
- au moins un niveau isolant adjacent à ladite piste conductrice (4), le niveau isolant ayant de préférence une épaisseur inférieure à celle du support isolant (3) et
- au moins un niveau conducteur entre le niveau isolant et le support isolant (3), le niveau conducteur comprenant un chemin conducteur intermédiaire relié électriquement à ladite piste conductrice (4) via lesdits trous métallisés (45).

7. Un stator (110) selon la revendication 4, dans lequel les parties de connexion (41) s'étendent au niveau des première et seconde parties d'extrémité (42, 43) et le long des parties intermédiaires (44) des pistes conductrices (4).

8. Un stator (110) selon l'une quelconque des revendications 1 à 7, où :
- chaque couche (2A, 2B, 2C) du circuit électrique (1) multicouches est divisée en une pluralité de modules (7) adjacents,
- chaque module (7) comporte une pluralité d'ouvertures (6), les ouvertures (6) des modules (7) de couches distinctes (2A, 2B, 2C) se faisant face pour définir lesdits sièges (112), deux ouvertures (6) d'un module (7) d'une couche (2A) faisant face aux ouvertures (6) de deux modules distincts (7) d'une couche adjacente (2B).

9. Un moteur électrique à flux axial (100) comprenant :
- un stator (110) tel que revendiqué dans l'une quelconque des revendications 1 à 8 et
- un rotor (120) connecté de manière rotative au stator (110) autour d'un axe qui s'étend dans une direction longitudinale (X-X), le rotor (120) comprenant une pluralité de régions polaires faisant face au stator (110) dans la direction longitudinale (X-X).

10. Une méthode de fabrication d'un stator (110) selon l'une quelconque des revendications 1 à 8, comprenant :
- la fourniture d'une première et une deuxième couche (2A, 2B), chaque couche (2A, 2B) étant organisée en secteurs et comprenant un support isolant (3) ayant une première et une deuxième faces opposées plates et parallèles (31, 32), le support isolant (3) ayant une ouverture (6) pour chaque secteur, et au moins deux pistes conductrices (4) opposées pour chaque secteur, qui sont fixées au support isolant (3) et sont connectées électriquement l'une à l'autre, les pistes conductrices (4) de chaque couche (2A, 2B, 2C) qui sont relatives à des secteurs différents n'étant pas reliées électriquement entre elles au sein de leur couche (2A, 2B, 2C), une première pluralité des pistes conductrices (4) étant associée à ladite première face (31) du support isolant (3), et une seconde pluralité de pistes conductrices (4) associées à ladite seconde face (32) du support isolant (3), chaque piste (4) ayant une première surface faisant face à son support respectif (3) et une seconde surface opposée à la première surface, chaque piste conductrice (4) formant une et une seule spire d'enroulement disposée autour d'une ouverture (6) respective,
- l'application d'un matériau (5) de connexion électriquement conducteur à des secondes surfaces de pistes conductrices (4) de la première ou de la seconde couche (2A, 2B) au niveau des parties de connexion (41) respectives,
- le placement des première et seconde couches (2A, 2B) en relation de face à face, de sorte que les ouvertures (6) des première et seconde couches (2A, 2B) se feront face l'une à l'autre, pour former ainsi une pluralité de sièges (112), et créer une connexion électrique entre les pistes conductrices (4) des première et seconde couches (2A, 2B) au moyen du matériau (5) de connexion, définissant ainsi, pour chaque siège (112), un chemin conducteur défini par lesdites pistes conductrices (4), qui forme une pluralité de spires d'enroulement disposés autour du siège (112),
- la fixation des première et seconde couches (2A, 2B) l'une à l'autre et
- le logement d'un noyau (111) fait en matériau ferromagnétique dans chaque siège respectif.

11. Un méthode selon la revendication 10, où :
- les au moins deux pistes conductrices (4) opposées d'une couche (2A, 2B) sont connectées électriquement l'une à l'autre par l'intermédiaire d'une pluralité de trous métallisés (45) formés dans le support isolant (3), au moins un trou (45) de la deuxième couche (2B) étant situé au niveau d'une partie de connexion (41),
- l'étape consistant à fournir la connexion électrique comprend le transfert de chaleur au matériau (5) de connexion au travers dudit trou (45).

12. Une méthode selon la revendication 11, où ledit trou (45) a un bord métallisé qui entoure une ouverture centrale, l'étape de transfert de chaleur au matériau (5) de connexion comprenant l'insertion de la pointe chauffante d'un outil de chauffage dans l'ouverture centrale du trou (45).

13. Une méthode selon la revendication 11 ou 12, où le transfert de chaleur vers le matériau (5) de connexion comprend le placement de la surface chauffante d'un outil de chauffage sur la deuxième couche (2B) au niveau dudit trou (45) depuis un côté opposé au matériau (5) de connexion.
